# EUROPÄISCHE PATENTSCHRIFT

(11) **EP 1 165 990 B1**
(45) Veröffentlichungstag und Bekanntmachung des Hinweises auf die Patenterteilung: **21.08.2002**
(21) Anmeldenummer: 01915005.1
(22) Anmeldetag: 08.02.2001
(51) Int. Cl.: F16H 63/48, F16H 61/12

(54) **"SHIFT BY WIRE" - SCHALTVORRICHTUNG FÜR EIN AUTOMATIKGETRIEBE EINES KRAFTFAHRZEUGES**
SHIFT BY WIRE SHIFTING DEVICE FOR AN AUTOMATIC TRANSMISSION OF A MOTOR VEHICLE
DISPOSITIF DE CHANGEMENT DE VITESSES DE TYPE SHIFT BY WIRE (AUTOMATISATION DU PASSAGE DE VITESSES) POUR BOITE DE VITESSES AUTOMATIQUE D'AUTOMOBILE

(30) Priorität: 08.02.2000 DE 10005167
(43) Veröffentlichungstag der Anmeldung: 02.01.2002
(73) Patentinhaber: ZF Lemförder Metallwaren AG, 49441 Lemförde (DE)
(72) Erfinder: GIEFER, Andreas, 49448 Lemförde (DE); MEYER, Jörg, 49419 Wagenfeld (DE)
(86) Internationale Anmeldenummer: DE0100492
(87) Internationale Veröffentlichungsnummer: WO01059336

(56) Entgegenhaltungen:
- WO-A-98/04430
- DE-A- 19 756 034
- DE-A- 19 810 479
- US-A- 5 954 179

## Beschreibung

Die Erfindung betrifft eine Schaltvorrichtung zur kraftlosen Übertragung von Schaltbefehlen an ein Automatikgetriebe eines Kraftfahrzeuges, mit einem in mindestens einer Schaltgasse schwenkbar gelagerten Schalthebel, einer Detektionsvorrichtung für die Schalthebelposition und einer kraftlosen Übertragungsvorrichtung für Schaltbefehle an das Automatikgetriebe, wobei die Detektionsvorrichtung und/oder die Übertragungsvorrichtung zumindest teilweise elektrisch/elektromagnetisch betrieben wird.

Eine derartige Schaltvorrichtung ist beispielsweise aus der Patentanmeldung DE 197 56 034 A1 der Anmelderin bekannt. Diese Patentanmeldung offenbart eine Schaltvorrichtung für ein Automatikgetriebe eines Kraftfahrzeuges, welche eine kraftlose Übertragung von Schaltbefehlen an ein Automatikgetriebe eines Kraftfahrzeuges ermöglicht. Diese Schaltvorrichtung verfügt über ein Gehäuse, einen um einen Drehpunkt in mindestens einer Schaltgasse schwenkbar gelagerten Schalthebel, eine Detektionsvorrichtung für die Schalthebelposition und eine elektrische Übertragungsvorrichtung für die Schaltbefehle an das Automatikgetriebe.

Ein Problem solcher sogenannter "Shift by Wire"-Schaltvorrichtungen liegt darin, daß bei einem Stromausfall, z.B. beim Versagen der Batterie oder der Lichtmaschine, eine normale Betätigung des Getriebes unmöglich wird. So kann ein Fahrzeug, das über Nacht und anschließendem Ausfall der Stromversorgung mit der Parkstellung (P-Stellung) des Getriebes abgestellt wurde, nur noch mit großem Aufwand bewegt oder abgeschleppt werden, da das Getriebe in der Parkstellung die Bewegung der Antriebsräder verhindert. Es wäre also wünschenswert, im Notfall auch bei sogenannten "Shift by Wire"-Schaltvorrichtungen und hierfür geeigneten Getrieben eine Möglichkeit zu eröffnen, das Getriebe in eine Neutralstellung zu schalten, die zumindest ein Abschleppen ohne blockierte Antriebsräder ermöglicht.

Der Erfindung liegt die technische Problemstellung zugrunde, eine Schaltvorrichtung zur kraftlosen Übertragung von Schaltbefehlen an ein Automatikgetriebe eines Kraftfahrzeuges zur Verfügung zu stellen, welche es erlaubt auch bei nicht vorhandener Stromversorgung eine Entriegelung der Parkstellung eines durch die Schaltvorrichtung zu bedienenden Automatik-Getriebes zu erreichen. Außerdem soll ein hierfür geeignetes Automatikgetriebe bereitgestellt werden.

Die technische Problemstellung der Erfindung wird durch eine Schaltvorrichtung mit den Merkmalen des Anspruches 1 und durch ein Automatikgetriebe gemäß Anspruch 14 gelöst.

Bei einer sogenannten "Shift by Wire"-Schaltvorrichtung, also einer Schaltvorrichtung zur kraftlosen Übertragung von Schaltbefehlen an ein Automatikgetriebe eines Kraftfahrzeuges, ist es trotz Stromausfall möglich, das Automatikgetriebe aus einer Parkstellung des Schalthebels, in der eine Parksperre wirksam ist und die Antriebsräder blockiert sind, zu entriegeln und in eine Neutralstellung zu bringen, in der die Antriebsräder frei beweglich sind. Hierzu wird es nötig, eine entsprechende mechanische Kopplung zwischen Schaltvorrichtung und Automatikgetriebe herzustellen, die jedoch bevorzugt bei vorhandener Stromversorgung, z.B. bei eingeschalteter Zündung, entkoppelt ist. Entsprechend muss das hierfür geeignete Automatikgetriebe über einen mechanischen Anschluß verfügen, durch den eine Entriegelung aus einer Parkstellung möglich ist.

Entsprechend dem Erfindungsgedanken wird vorgeschlagen, die bekannte Schaltvorrichtung zur kraftlosen Übertragung von Schaltbefehlen an ein Automatikgetriebe eines Kraftfahrzeuges, mit einem in mindestens einer Schaltgasse schwenkbar gelagerten Schalthebel mit einer Detektionsvorrichtung für die Schalthebelposition und einer Übertragungsvorrichtung für Schaltbefehle an das Automatikgetriebe, wobei die Detektionsvorrichtung und/oder die Übertragungsvorrichtung zumindest teilweise elektrisch betrieben wird, dahingehend weiterzuentwickeln, daß ein Mittel zur mechanischen Kopplung zwischen Schalthebel und Automatikgetriebe vorgesehen ist, das eine Entriegelung der Parkstellung des Automatikgetriebes bewirken kann. Durch diese zusätzliche mechanische Ankopplung des Automatikgetriebes mit der Schaltvorrichtung wird erreicht, daß auch bei einem Stromausfall zumindest eine Entriegelung der Parkstellung des Automatikgetriebes möglich ist.

In einer weiteren Ausgestaltung der Schaltvorrichtung wird vorgeschlagen, daß ein, vorzugsweise elektrisch betriebenes, Mittel zur Entriegelung der mechanischen Kopplung zwischen Schalthebel und Automatikgetriebe vorgesehen ist. Durch diese mechanische Entkopplung von Schaltvorrichtung und Automatikgetriebe, die je nach Auslegung des Automatikgetriebes für eine einwandfreie und normale Funktion notwendig sein kann, besteht auch die Möglichkeit diese Funktion als eine zusätzliche Diebstahlsicherung oder Wegfahrsperre zu nutzen, da nur in einem entkoppelten Zustand eine Kraftübertragung zwischen Motor und Antriebsrädern ermöglicht wird. Erfindungsgemäß kann das Mittel zur.Entriegelung nicht nur an der Schaltvorrichtung selbst, sondern auch am Getriebe angebracht sein, allerdings werden in diesem Fall die im Normalfall aufzuwendenden Kräfte größer als bei einer Entkopplung direkt an der Schaltvorrichtung.

Eine besondere Ausbildung der Schaltvorrichtung sieht vor, daß das Mittel zur mechanischen Kopplung zwischen Schalthebel und Automatikgetriebe einen Haken aufweist, der in ein Gegenstück eingreifen kann, dessen Bewegung mit. der Schaltbewegung des Schalthebels gekoppelt ist.

Das Mittel zur mechanischen Kopplung zwischen Schaltvorrichtung und Automatikgetriebe kann beispielsweise ein Bowdenzug und/oder ein Gestänge und/oder eine Hydraulikverbindung oder ein Gestänge sein.

Des weiteren schlägt der Erfinder vor, die Schaltvorrichtung in einer besonders vorteilhaften Ausführung so auszugestalten, daß das Mittel zur mechanischen Kopplung zwei Hebelarme aufweist, wobei vorzugsweise der erste Hebelarm schwenkbar mit der Schaltvorrichtung verbunden ist, so daß ein Verschwenken den Bowdenzug und/oder die Hydraulikverbindung zum Automatikgetriebe betätigt, und weiterhin mit dem zweiten, als Haken wirkenden, Hebelarm schwenkbar verbunden ist.

Vorzugsweise weist die Schaltvorrichtung hierbei ein Federelement zwischen dem ersten und dem zweiten Hebelarm auf, das den Eingriff des Hakens in sein Gegenstück sichert. Das Federelement kann hierbei als Spiralfeder oder als Blattfeder ausgeführt sein. Es dient dazu eine auch bei Fahrzeugerschütterung und ungünstigen Lageveränderungen sichere Verbindung zwischen dem Haken und seinem Gegenstück zu gewährleisten. Das Gegenstück kann beispielsweise ein mit dem Schalthebel verbundener Bolzen oder eine Rolle oder der Schalthebel selbst sein. Ebenso kann das Gegenstück ein mit dem Schalthebel verbundener weiterer Haken sein, der gegebenenfalls schwenkbar befestigt ist.

Damit ein leichtes und kraftarmes Eingreifen des Hakens in das Gegenstück ermöglicht wird, kann der zweite Hebelarm, insbesondere der Haken, eine Gleitfläche aufweisen, die derart angeschrägt ist, daß der Haken bei einer Annäherung des Gegenstücks ausweichen kann und dann einhakt.

Bezüglich der Anordnung und Bewegungsrichtungen der beiden Hebelarme wird vorgeschlagen, daß der erste und zweite Hebelarm vorzugsweise zwei Schwenkachsen aufweisen, die parallel oder senkrecht zueinander angeordnet sein können.

Erfindungsgemäß wird weiterhin vorgeschlagen, daß das Mittel zur Entriegelung der mechanischen Kopplung zwischen Schalthebel und Automatikgetriebe ein elektrisch betätigter Bolzen oder ein schaltbarer Zug- oder Druckmagnet ist, der den Haken in eine Entriegelungsstellung bewegen kann.

Zur Realisierung des Erfindungsgedanken ist es neben der erfindungsgemäßen Ausführung der Schaltvorrichtung auch notwendig, das Automatikgetriebe zum Anschluß an diese Schaltvorrichtung so zu gestalten, daß neben dem Eingang zur kraftlosen Übertragung der Schaltbefehle von der Schaltvorrichtung ein mechanischer, kraftgesteuerter Eingang zur direkten mechanischen Entriegelung der Parkstellung, vorzugsweise zum Übergang in eine Neutralstellung, vorgesehen ist.

Vorteilhaft kann das Getriebe so ausgestaltet werden, dass der mechanische Eingang ein Anschluß an einen Bowdenzug oder Gestänge ist, oder dass der mechanische Eingang ein Anschluß an eine Hydraulikleitung ist.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figur 1:: Seitenansicht einer erfindungsgemäßen Schaltvorrichtung, Schalthebel in N-Stellung, ohne mechanische Kopplung, Entriegelungsvorrichtung stromlos;
- Figur 2:: Seitenansicht einer erfindungsgemäßen Schaltvorrichtung, Schalthebel in P-Stellung, mechanische Kopplung eingerastet, Entriegelungsvorrichtung stromlos;
- Figur 3:: Seitenansicht einer erfindungsgemäßen Schaltvorrichtung, Schalthebel in N-Stellung, mechanische Kopplung eingerastet und Getriebe entriegelt, Entriegelungsvorrichtung stromlos;

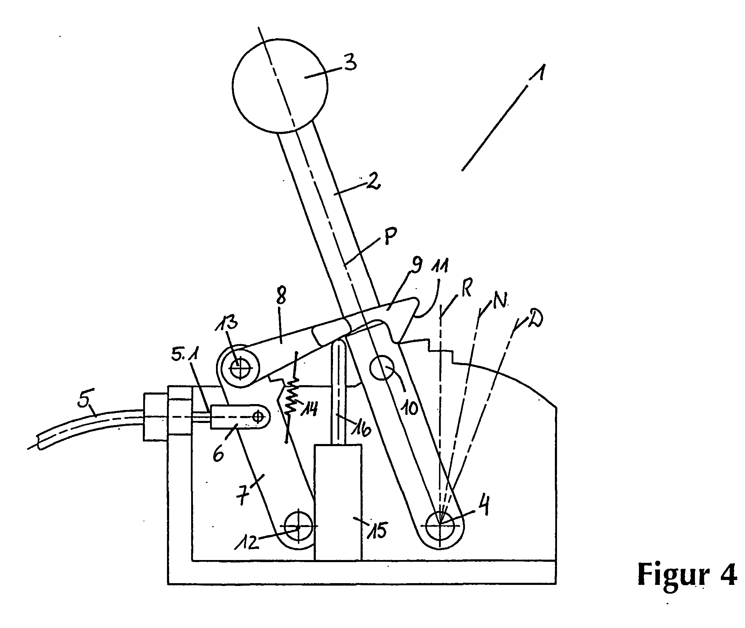

- Figur 4:: Seitenansicht einer erfindungsgemäßen Schaltvorrichtung, Schalthebel in P-Stellung und frei beweglich, mechanische Kopplung entriegelt, Entriegelungsvorrichtung aktiv.

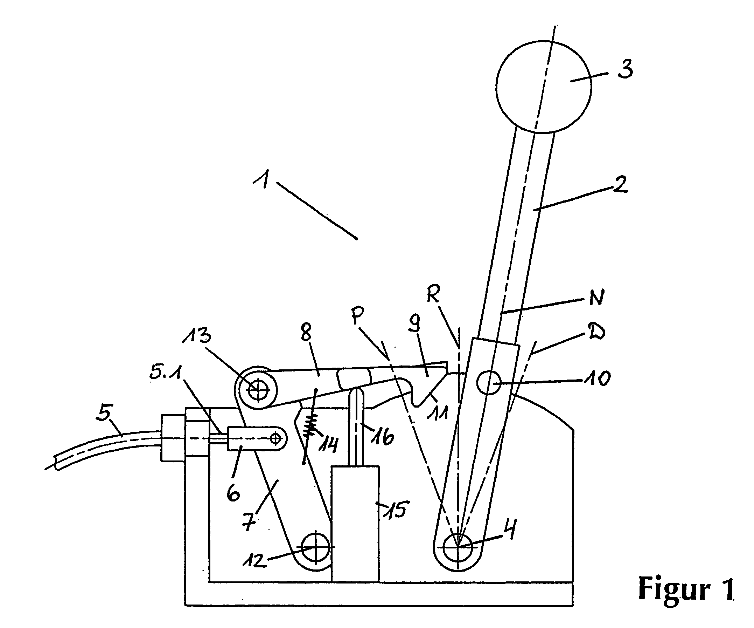

Die Figur 1 zeigt eine Seitenansicht einer erfindungsgemäßen Schaltvorrichtung 1 mit einem Schalthebel 2, der sich in Neutralstellung befindet. Der Schalthebel 2 ist um eine Schwenkachse 4 schwenkbar und in dem hier gezeigten Beispiel in den Schaltstellungen P, R, N und D positionierbar. Erfindungsgemäß verfügt die Schaltvorrichtung 1 über eine mechanische Kopplung zu einem hier nicht dargestellten Automatikgetriebe. Die mechanische Kopplung wird über einen Bowdenzug 5 herbeigeführt, dessen Seilzug 5.1 über eine Seilzugklemme 6 mit einem ersten Hebelarm 7 verbunden ist. Der erste Hebelarm 7 ist mit einer ersten Schwenkachse 12 an der Schaltvorrichtung 1 schwenkbar befestigt. Am gegenüberliegenden Ende des ersten Hebels 7 befindet sich eine zweite Schwenkachse, an der ein zweiter Hebel 8 schwenkbar angebracht ist. Der zweite Hebel 8 verfügt an seinem freien Ende über einen Haken 9, der eine schräge Gleitfläche 11 aufweist. Unterhalb des freien Hebels 8 ist eine elektromagnetische Entriegelungsvorrichtung 15 dargestellt, die über einen Bolzen 16 verfügt, der durch elektromagnetische Wirkung ein- und ausgefahren werden kann und damit den zweiten Hebelarm 8 anheben und absenken kann. Ein ständiges Anliegen des zweiten Hebelarms 8 am Bolzen 16 wird durch eine Feder 14 bewirkt, die den ersten Hebelarm 7 mit dem zweiten Hebelarm 8 federnd verbindet.

Am Schalthebel 2 ist ein Bolzen 10 angebracht, der als Gegenstück für den Haken 9 wirken kann. Wird der Schalthebel 2 in die P-Stellung verschwenkt, so gleitet der Bolzen 10 an der Gleitfläche 11 des Hakens 9 auf, schwenkt den Haken 9 nach oben, bis der Eingriff des Hakens 9 in den Bolzen 10, gestützt von der Feder 14, bewirkt wird.

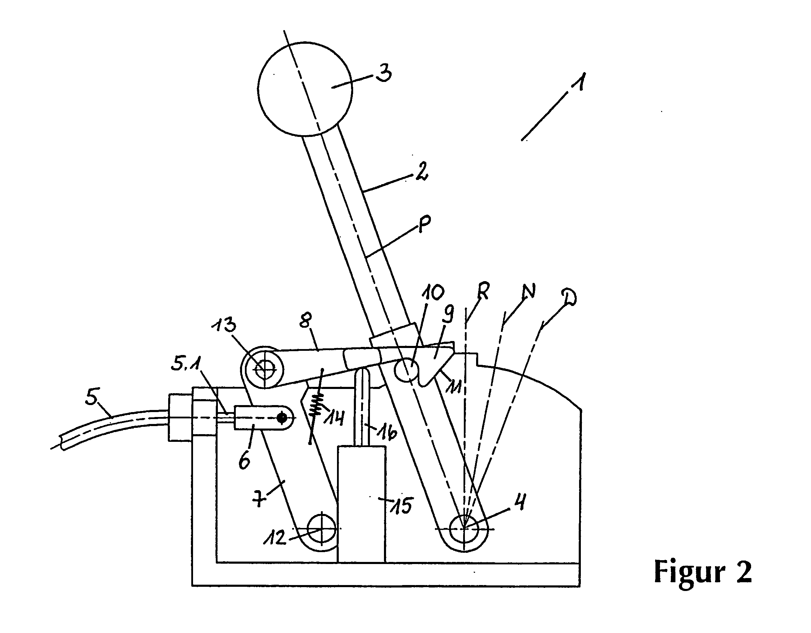

Eine solche Situation des Eingreifens des Hakens 9 in das als Bolzen 10 ausgebildete Gegenstück ist in der Figur 2 zu sehen. Hier ist ebenfalls, wie in der Figur 1, die elektromagnetische Entriegelungsvorrichtung 15 stromlos, so daß der Bolzen 16 sich in einem eingefahrenen Zustand befindet und den zweiten Hebelarm 8 nicht anhebt beziehungsweise in einer unteren Stellung fahren läßt.

Wird nun in dieser Situation, in der die elektromagnetische Entriegelungsvorrichtung 15 stromlos ist, der Schalthebel 2 unter Kraftaufwendung in seine Neutralposition gezogen, so erfolgt ein Herausziehen des Bowdenzugs, wobei diese mechanische Kopplung an das damit verbundene Automatikgetriebe übertragen werden kann.

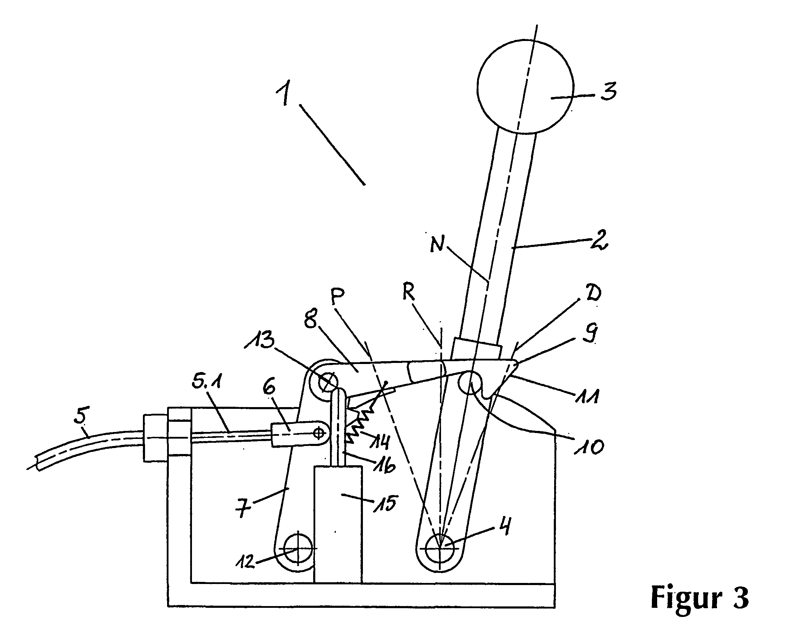

Die Figur 3 zeigt die erfindungsgemäße Schaltvorrichtung, bei der der zweite Hebel 8 beziehungsweise der Haken 9 eingehakt und der Schalthebel in Neutralposition zurückgeschwenkt ist. Die Entriegelungsvorrichtung 15 ist nicht aktiv, so daß über den Bowdenzug 5 eine Entriegelung der P-Stellung des Automatikgetriebes vorgenommen werden kann und damit eine freie Bewegung der Antriebsräder ermöglicht wird.

Befindet sich das Kraftfahrzeug mit der erfindungsgemäßen Schaltvorrichtung in einer Normalsituation, das heißt es ist eine ausreichende Stromversorgung gewährleistet, so wird, vorzugsweise durch Einschalten der Zündung, die elektromagnetische Entriegelungsvorrichtung 15 betätigt, wodurch der Bolzen 16 ausfährt und den zweiten Hebelarm 8 der mechanischen Kopplungsvorrichtung anhebt. Hierdurch kann nun der Schalthebel 2 in alle Stellungen bewegt werden, ohne daß eine mechanische Kraftübertragung an das damit verbundene Automatikgetriebe entsteht.

Insgesamt wird also durch die erfindungsgemäße Schaltvorrichtung erreicht, daß es trotz Stromausfall nun möglich ist bei einer "Shift by Wire"-Schaltvorrichtung und entsprechendem Getriebe, das Getriebe aus der Parkstellung zu entriegeln und damit die Antriebsräder freizugeben.

Zusätzlich besteht die Möglichkeit diese mechanische Kopplung als Wegfahrsperre oder Diebstahlsicherung zu nutzen, da ohne eine Aktivierung der Entriegelungsvorrichtung 15 keine Möglichkeit besteht, das Getriebe normal zu schalten und dadurch ein selbständiges Fahren des Fahrzeuges unterbunden wird.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

Es ist darauf hinzuweisen, daß der in dieser Schrift verwendete Begriff "Automatikgetriebe" auch sogenannte "Halbautomatikgetriebe" einschließt, die zum Anschluß an sogenannte "Shift by Wire"-Schaltvorrichtungen geeignet sind, wobei unter "Shift by Wire" alle kraftlosen Übertragungsarten von Schaltinformationen aus einer Schaltvorrichtung an ein Getriebe einschließlich elektronischer und optischer Übertragungen ("Shift by Light") eingeschlossen sind.

### BEZUGSZEICHENLISTE:

- 1: Schaltvorrichtung
- 2: Schalthebel
- 3: Schaltknauf
- 4: Drehachse des Schalthebels
- 5: Bowdenzug
- 5.1: Seilzug
- 6: Seilzugklemme
- 7: erster Hebel
- 8: zweiter Hebel
- 9: Haken
- 10: Bolzen/Gegenstück
- 11: Gleitfläche
- 12: erste Schwenkachse
- 13: zweite Schwenkachse
- 14: Feder
- 15: elektromagnetische Entriegelungsvorrichtung
- 16: Bolzen

## Patentansprüche

1. Schaltvorrichtung (1) zur kraftlosen Übertragung von Schaltbefehlen an ein Automatikgetriebe eines Kraftfahrzeuges, mit einem in mindestens einer Schaltgasse schwenkbar gelagerten Schalthebel (2), mit einer Detektionsvorrichtung für die Schalthebelposition (P, R, N, D...) und einer kraftlosen Übertragungsvorrichtung für Schaltbefehle an das Automatikgetriebe, wobei die Detektionsvorrichtung und/oder die Übertragungsvorrichtung zumindest teilweise elektrisch/elektromagnetisch betrieben ist, **dadurch gekennzeichnet, dass** die Schaltvorrichtung ein Mittel (5 - 14) zur Entriegelung der Parksperre des Automatikgetriebes in Form einer mechanischen Kopplung zwischen Schalthebel (2) und Automatikgetriebe aufweist.

2. Schaltvorrichtung (1) gemäß dem voranstehenden Anspruch 1, **dadurch gekennzeichnet, dass** ein, vorzugsweise elektrisch betriebenes, Mittel (15, 16) zur Entriegelung der mechanischen Kopplung zwischen Schalthebel (2) und Automatikgetriebe vorgesehen ist.

3. Schaltvorrichtung (1) gemäß einem der voranstehenden Ansprüche, **dadurch gekennzeichnet, dass** das Mittel (5 - 14) zur mechanischen Kopplung zwischen Schalthebel (2) und Automatikgetriebe einen Haken (9) aufweist, der in ein mit dem Schalthebel (2) gekoppeltes Gegenstück (10) eingreift.

4. Schaltvorrichtung (1) gemäß einem der voranstehenden Ansprüche, **dadurch gekennzeichnet, dass** das Mittel (5 - 14) zur mechanischen Kopplung einen Bowdenzug (5) und/oder ein Gestänge und/oder eine Hydraulikverbindung zum Automatikgetriebe aufweist.

5. Schaltvorrichtung (1) gemäß dem voranstehenden Anspruch 4, **dadurch gekennzeichnet, dass** das Mittel (5 - 14) zur mechanischen Kopplung zwei Hebelarme (7, 8) aufweist, wobei vorzugsweise der erste Hebelarm (7) schwenkbar mit der Schaltvorrichtung (1) verbunden ist, so daß ein Verschwenken den Bowdenzug (5) und/oder ein Gestänge und/oder die Hydraulikverbindung zum Automatikgetriebe betätigt, und weiterhin mit dem zweiten, einen Haken (9) aufweisenden Hebelarm (8) schwenkbar verbunden ist.

6. Schaltvorrichtung (1) gemäß dem voranstehenden Anspruch 5, **dadurch gekennzeichnet, dass** der erste und der zweite Hebelarm ein Federelement (14) aufweisen, das den Eingriff des Hakens (9) in sein Gegenstück sichert.

7. Schaltvorrichtung (1) gemäß dem voranstehenden Anspruch 6, **dadurch gekennzeichnet, dass** das Federelement (14) eine Spiralfeder oder eine Blattfeder ist.

8. Schaltvorrichtung (1) gemäß einem der voranstehenden Ansprüche, **dadurch gekennzeichnet, dass** das Gegenstück (10) ein mit dem Schalthebel verbundener Bolzen oder eine Rolle oder der Schalthebel selbst ist.

9. Schaltvorrichtung (1) gemäß einem der voranstehenden Ansprüche 1 bis 7, **dadurch gekennzeichnet, dass** das Gegenstück ein mit dem Schalthebel verbundener weiterer Haken ist, der gegebenenfalls schwenkbar befestigt ist.

10. Schaltvorrichtung (1) gemäß einem der voranstehenden Ansprüche, **dadurch gekennzeichnet, dass** das der zweite Hebelarm (8), insbesondere der Haken (9), eine Gleitfläche (11) aufweist, die derart angeschrägt ist, daß der Haken (9) bei einer Annäherung des Gegenstücks (10) ausweichen kann und dann einhakt.

11. Schaltvorrichtung (1) gemäß einem der voranstehenden Ansprüche, **dadurch gekennzeichnet, dass** der erste und zweite Hebelarm (7, 8) zwei Schwenkachsen (12, 13) aufweisen, die parallel oder senkrecht zueinander angeordnet sind.

12. Schaltvorrichtung (1) gemäß einem der voranstehenden Ansprüche, **dadurch gekennzeichnet, dass** das Mittel (15, 16) zur Entriegelung der mechanischen Kopplung zwischen Schalthebel (2) und Automatikgetriebe ein elektrisch betätigter Bolzen (16) ist.

13. Schaltvorrichtung (1) gemäß einem der voranstehenden Ansprüche 1 bis 11, **dadurch gekennzeichnet, dass** das Mittel zur Entriegelung der mechanischen Kopplung zwischen Schalthebel und Automatikgetriebe ein schaltbarer Zugoder Druckmagnet ist, der den Haken (9) in eine Entriegelungsstellung bewegen kann.

14. Getriebe eines Kraftfahrzeuges zum Anschluß an eine Schaltvorrichtung gemäß einem der voranstehenden Ansprüche, **dadurch gekennzeichnet, dass** neben dem Eingang zur kraftlosen Übertragung der Schaltbefehle von der Schaltvorrichtung (1) ein mechanischer, kraftgesteuerter Eingang zur direkten mechanischen Entriegelung der Parkstellung, vorzugsweise zum Übergang in eine Neutralstellung, vorgesehen ist.

15. Getriebe gemäß dem voranstehenden Anspruch 14, **dadurch gekennzeichnet, dass** der mechanische Eingang ein Anschluß an einen Bowdenzug oder ein Gestänge ist.

16. Getriebe gemäß dem voranstehenden Anspruch 14, **dadurch gekennzeichnet, dass** der mechanische Eingang ein Anschluß an eine Hydraulikleitung ist.

## Claims

1. Shift device (1) for the power-free transfer of shift commands to an automatic transmission of a motor vehicle, with a gearshift lever (2) which is pivotably mounted in at least one shift path, with a detection device for the gearshift lever position (P, R, N, D...) and a power-free transfer device for transferring shift commands to the automatic transmission, wherein the detection device and/or the transfer device is/are operated at least partly electrically/electromagnetically, **characterised in that** the shift device comprises a means (5 - 14) for releasing the parking lock of the automatic transmission in the form of a mechanical coupling between the gearshift lever (2) and the automatic transmission.

2. Shift device (1) according to the preceding Claim 1, **characterised in that** a, preferably electrically operated, means (15, 16) is provided for releasing the mechanical coupling between the gearshift lever (2) and the automatic transmission.

3. Shift device (1) according to any one of the preceding Claims, **characterised in that** the means (5 - 14) for the mechanical coupling between the gearshift lever (2) and the automatic transmission (9) comprises a hook (9) which engages in a counter-piece (10) coupled to the gearshift lever (2).

4. Shift device (1) according to any one of the preceding Claims, **characterised in that** the means (5 - 14) for the mechanical coupling comprises a Bowden cable (5) and/or a linkage and/or a hydraulic connection to the automatic transmission.

5. Shift device (1) according to the preceding Claim 4, **characterised in that** the means (5 - 14) for the mechanical coupling comprises two lever arms (7, 8), wherein the first lever arm (7) is preferably pivotably connected to the shift device (1), so that a pivotal movement operates the Bowden cable (5) and/or a linkage and/or the hydraulic connection to the automatic transmission, and is also pivotably connected to the second lever arm (8) comprising a hook (9).

6. Shift device (1) according to the preceding Claim 5, **characterised in that** the first and the second lever arms comprise a spring element (14) which secures the engagement of the hook (9) in its counter-piece.

7. Shift device (1) according to the preceding Claim 6, **characterised in that** the spring element (14) is a spiral spring or a leaf spring.

8. Shift device (1) according to any one of the preceding Claims, **characterised in that** the counter-piece (10) is a pin which is connected to the gearshift lever or a roller or the actual gearshift lever.

9. Shift device (1) according to any one of the preceding Claims 1 to 7, **characterised in that** the counter-piece is a further hook which is connected to the gearshift lever and is optionally fastened in a pivotable manner.

10. Shift device (1) according to any one of the preceding Claims, **characterised in that** the second lever arm (8), in particular the hook (9), comprises a slide face (11) which is bevelled such that the hook (9) can give way when the counter-piece (10) approaches and then hook in.

11. Shift device (1) according to any one of the preceding Claims 1 to 7, **characterised in that** the first and second lever arms (7, 8) have two pivot axes (12, 13) which are disposed parallel or perpendicularly to one another.

12. Shift device (1) according to any one of the preceding Claims, **characterised in that** the means (15, 16) for releasing the mechanical coupling between the gearshift lever (2) and the automatic transmission is an electrically operated pin (16).

13. Shift device (1) according to any one of the preceding Claims 1 to 11, **characterised in that** the means for releasing the mechanical coupling between the gearshift lever and the automatic transmission is a switchable pull or pressure magnet which can move the hook (9) into a release position.

14. Transmission of a motor vehicle for connection to a shift device according to any one of the preceding Claims, **characterised in that**, in addition to the input for the power-free transfer of shift commands from the shift device (1), a mechanical, power-controlled input is provided for the direct mechanical release of the parking position, preferably for changing over to a neutral position.

15. Transmission according to the preceding Claim 14, **characterised in that** the mechanical input is a connection to a Bowden cable or a linkage.

16. Transmission according to the preceding Claim 14, **characterised in that** the mechanical input is a connection to a hydraulic line.

## Revendications

1. Dispositif de changement de vitesse (1) pour la transmission sans force d'instructions de changement de vitesse à une boîte de vitesses automatique d'un véhicule automobile, comportant un levier de changement de vitesse (2) monté pivotant dans au moins une piste de commutation, comportant un dispositif de détection pour la position (P,R,N,D...) du levier de changement de vitesse et un dispositif de transmission sans force des instructions de changement de vitesse à la boîte de vitesses automatique, le dispositif de détection et/ou le dispositif de transmission fonctionnant au moins en partie électriquement/électromagnétiquement, **caractérisé en ce que** le dispositif de changement de vitesse comporte un moyen (5 à 14) pour déverrouiller le verrouillage de stationnement de la boîte de vitesses automatique sous la forme d'un accouplement mécanique entre le levier de changement de vitesse (2) et la boîte de vitesses automatique.

2. Dispositif de changement de vitesse (1) selon la revendication 1 précédente, **caractérisé en ce qu'**il est prévu un moyen (15, 16), de préférence à fonctionnement électrique, pour le déverrouillage de l'accouplement mécanique entre le levier de changement de vitesse (2) et la boîte de vitesses automatique.

3. Dispositif de changement de vitesse (1) selon l'une des revendications précédentes, **caractérisé en ce que** le moyen (5 à 14) pour l'accouplement mécanique entre le levier de changement de vitesse (2) et la boîte de vitesses automatique, comporte un crochet (9) qui s'engage dans une contre-pièce (10) accouplée au levier de changement de vitesse (2).

4. Dispositif de changement de vitesse (1) selon l'une des revendications précédentes, **caractérisé en ce que** le moyen (5 à 14) pour l'accouplement mécanique comporte un câble Bowden (5) et/ou une tringlerie et/ou une liaison hydraulique avec la boîte de vitesses automatique.

5. Dispositif de changement de vitesse (1) selon la revendication 4 précédente, **caractérisé en ce que** le moyen (5 à 14) pour l'accouplement mécanique comporte deux bras de levier (7, 8), le premier bras de levier (7) étant relié de préférence pivotant au dispositif de changement de vitesse (1) de manière qu'un pivotement actionne le câble Bowden (5) et/ou une tringlerie et/ou la liaison hydraulique avec la boîte de vitesses automatique, et est en outre relié pivotant au deuxième bras de levier (8) qui comporte un crochet (9).

6. Dispositif de changement de vitesse (1) selon la revendication 5 précédente, **caractérisé en ce que** le premier et le deuxième bras de levier comportent un élément à ressort (14) qui assure l'engagement du crochet (9) dans sa contre-pièce.

7. Dispositif de changement de vitesse (1) selon la revendication 6 précédente, **caractérisé en ce que** l'élément à ressort (14) est un ressort spiral ou un ressort à lame.

8. Dispositif de changement de vitesse (1) selon l'une des revendications précédentes, **caractérisé en ce que** la contre-pièce (10) est une tige reliée au levier de changement de vitesse ou un galet ou le levier de changement de vitesse lui-même.

9. Dispositif de changement de vitesse (1) selon l'une des revendications 1 à 7 précédentes, **caractérisé en ce que** la contre-pièce est un autre crochet qui est relié au levier de changement de vitesse et qui est éventuellement fixé de manière à pouvoir pivoter.

10. Dispositif de changement de vitesse (1) selon l'une des revendications précédentes, **caractérisé en ce que** le deuxième bras de levier (8), en particulier le crochet (9), présente une surface de glissement (11) qui est chanfreinée de manière que le crochet (9) puisse s'écarter, lorsqu'il s'approche de la contre-pièce (10), et s'accroche ensuite.

11. Dispositif de changement de vitesse (1) selon Tune des revendications précédentes, **caractérisé en ce que** le premier et le deuxième bras de levier (7, 8) comportent deux axes de pivotement (12, 13) qui sont disposés parallèlement ou perpendiculairement l'un à l'autre.

12. Dispositif de changement de vitesse (1) selon l'une des revendications précédentes, **caractérisé en ce que** le moyen (15, 16) pour déverrouiller l'accouplement mécanique entre le levier de changement de vitesse (2) et la boîte de vitesses automatique est une tige (16) actionnée électriquement.

13. Dispositif de changement de vitesse (1) selon l'une des revendications 1 à 11 précédentes, **caractérisé en ce que** le moyen pour déverrouiller l'accouplement mécanique entre le levier de changement de vitesse et la boîte de vitesses automatique est un aimant de traction ou de pression commutable qui peut déplacer le crochet (9) dans une position de déverrouillage.

14. Boîte de vitesses d'un véhicule automobile à raccorder à un dispositif de changement de vitesse selon l'une des revendications précédentes, **caractérisée en ce qu'**il est prévu, outre l'entrée pour la transmission sans force des instructions de changement de vitesse du dispositif de changement de vitesse (1), une entrée mécanique, commandée à force, pour le déverrouillage mécanique direct de la position de stationnement, de préférence pour le passage dans une position neutre.

15. Boîte de vitesses selon la revendication 14 précédente, **caractérisée en ce que** l'entrée mécanique est un raccordement à un câble Bowden ou une tringlerie.

16. Boîte de vitesses selon la revendication 14 précédente, **caractérisée en ce que** l'entrée mécanique est un raccordement à une conduite hydraulique.
